# EUROPEAN PATENT APPLICATION

(11) **EP 2 136 187 A1**
(43) Date of publication of application: **23.12.2009**
(21) Application number: 09075178.5
(22) Date of filing: 03.04.2009
(51) Int. Cl.: G01F 15/12, B01D 29/00, E03B 7/07, F16K 27/06

(54) **Water flow reducer device**

(30) Priority: 04.04.2008 IT CA20080012
(71) Applicant: Cagnacci, Andrea, 09010 Vallermosa (CA) (IT)
(72) Inventor: Cagnacci, Andrea, 09010 Vallermosa (CA) (IT)

(57) **Abstract**

Water flow reducer device for reducing the flow through a "Y" filter to a predetermined delivery rate. The device is adapted to adjust the flow rate by forcing the flow through a washer equipped with a calibrated hole. The water flow reducer device is adapted to be placed either after the "Y" filter for the filtering function or before said "Y" filter for the filtering function plus flow reduction.

## Description

### Invention field

This invention refers to a water device, particularly pipe fitting and on line filter.

### Actual technical state

Filters on sale, fit to pull apart impurities in the water, are made, for the most part, by a body in which there is the filtering cartridge.

The standards provide filters to be inspected through a plug, for the cleaning or the filtering piece substitution. These devices are applied in all cases where the hydraulic circuit needs to be preserved downhill from impurities transported by the flow.

A particularly sensible equipment is the water metre used by the state holding companies for the accounting of customers' water volume.

This hydraulic engine, equipped with gearings set in motion by the passing water flow, can be seriously damaged by sand grains or any other kind of impurity that could slow down or interact with the turbine.

All water metres are equipped with a pad filter and a bag filter at the inlet.

After installation, the cleaning of the filter will just be executed by disassembling the water metre and consequently interrupting the supply to the customer.

This manipulation represents a real unconvenience to the customer and implies conspicuous charges for the holding company that is obliged to intervene with qualified manpower because the water metre is a fiscal counter certified by the metric bureau.

Many companies add an examinable filter upstream the water metre to avoid the filter gets dirty and to enable the cleaning without disassembling the water metre.

"Y" filters are the best suitable models, they are available on the market in different calibres and samples and meet all the needs of primary water filtering.

Filtration is accomplished by a stainless net cartridge available with meshes more or less close.

Apart the water metre functionality protection question, holding companies have a more serious problem: defaulting customers.

Well known is in fact that not all customers punctually respect the bills time of payment; in the case of electricity bills, holding companies usually apply a power reduction delivered by the counter which is enough for habitation lighting but not to supply household appliances.

This brings defaulting customers to the bills payment and to the consequent putting back in service of electric supply.

The procedure followed for the urban gas by holding companies is usually the same.

As far as water is concerned, in some cases service interruption is expected, but water is worldwide considered to be a public an inalienable right for the population; at the moment any kind of defence against arrearage exists from holding companies apart a complete interruption of supply.

### Invention summary

The purpose of this invention is to provide a water device fit to water filtering and, through an appropriate working to execute on the filtering cartridge, fit to the reduction of the passing flow to a stated delivery capacity.

This invention aims to achieve the but described above realising a water device, in compliance with claim n°1.

### Short description of illustrations

Further invention characteristics result clearer from the detailed description of a favourite, but not exclusive, form realisation of hydraulic device which is illustrated only by way of example but not limitative; with the support of the unit drawing tables in which:
Illustration 1 represents a "Y' filter equipped with a net filtering cylinder Illustration 1 (102) in normal position of use. At the lower extremity of it there is an anti-noise device Illustration 1 (104) in inert position.
Illustration 2 represents the "Y" filter from illustration 1 in which the net filtering cylinder Illustration 2 (102) has been turned upside down with the anti-noise device Illustration 2 (104) that, in this position, accomplishes the task of hydraulic discharge reducer.
Illustration 3 represents a ball valve Illustration 3 (120) in which the net filtering cylinder Illustration 3 (102) with the anti-noise device Illustration 3 (104), in normal position of use, have been integrated on a proper place equipped with an inspection plug Illustration 3 (101).
Illustration 4 represents the ball valve from illustration 3 with an anti-noise device Illustration 4 (104), in the position that accomplishes the task of hydraulic discharge reducer.
Illustration 5 represents the net filtering cylinder Illustration 5 (102) from a side and an above view and it shows the hydraulic discharge reducer device from a side and above view as well Illustration 5 (104) with a hole balanced for the passing flow Illustration 5 (111).

### Detailed description of a favourite realisation form of the invention

According to this invention, in illustrations 1, 2, 3 and 4, such a device Illustration 2 (104), with an opportune manipulation, allows to reduce the flow of the waters Illustration 2 (105) passing in a "Y" filter to a stated capacity Illustration 2 (106).

The device applies the calibrated lens principle by which it's possible to adjust the flow capacity forcing it to pass in a calibrated hole Illustration 2 (111).

Illustration 1 shows an example of a favourite realisation in which a calibrated lens Illustration 2 (104) has been obtained closing a filtering cartridge head Illustration 2 (102) with a stainless steel washer; this washer will then be pierced Illustration 2 (111) in central position being the calibrated lens. When the lens is in a lower position (lens towards the filter plug), the cartridge just accomplishes the ordinary filtration functions.

Illustration 2 shows the same device of illustration 1 with the calibrated lens Illustration 2 (104) in a higher position (lens towards valve body) through which the flow will pass at first through the calibrated hole Illustration 2 (111) that determines the coming out capacity, then through the filtering net Illustration 2 (102).

Illustration 5 represents a detailed view of the filtering cartridge Illustration 2 (102) equipped, on its extremity, with the calibrated hole Illustration 2 (111) device Illustration 2 (104) for the capacity reduction.

In the realisation showed in illustrations 1, 2, 3 and 4, there's a "Y" filter with a filtering cartridge positioned at 45° from the longitudinal line pipe fitting that contains it.

This expedient can be applied to all sloping or straight "Y" filters of all dimensions and for every kind of fluid.

The filtering cartridge will preferably be, but not exclusively, of cylindrical shape in order to represent the same dimensions from on end to the other, indispensable condition for the turn-out position and the starting from a function to another.

This example isn't to be considered restrictive, in fact, other hydraulic devices equipped with a filtering cartridge having a discharge reducer device at its extremity can be realized, like for example ball valves, on way valves, etc.

A favourite, but not exclusive, realisation provides a coupling sleeve female-female, male-female or male-male of every kind of metallic and non-metallic material, equipped with a filtering cartridge Illustration 2 (102) with a discharge reducer device Illustration 2 (104), fitted to be set up on new or already existing waterworks. This invention, apart from being an adequate waterworks and hydraulic devices protection from solid particles present in water, represents an efficient instrument to fight in an ethical manner, the customers' insolvency.

The customers' arrearage problem, in fact, is faced by holding companies, after having sent many reminders, with the suspension of supply that is applied in cases where there has been a counter or seals tampering, a voluntary damage of the equipment belonging to holding companies, a resale of water resources without authorisation, etc.

The total interruption of the service which is right of holding companies ratified by many service bills, is in conflict with the citizens' right to have "the minimum vital flow" always warranted, it's quantified by the World Contract Water in 50 litres a day per head; it's lawful that holding companies defend their right to collect invoiced amounts. On the other way, it's not ethical to deny totally the access from water resources to a family in which there may be weak people.

This expedient, allowing the flow reduction calculated in order to warrant the minimum vital but that doesn't allows the use many household appliances, constrains the customer to the payment of bills to the holding company, avoiding in that way social persecutions.

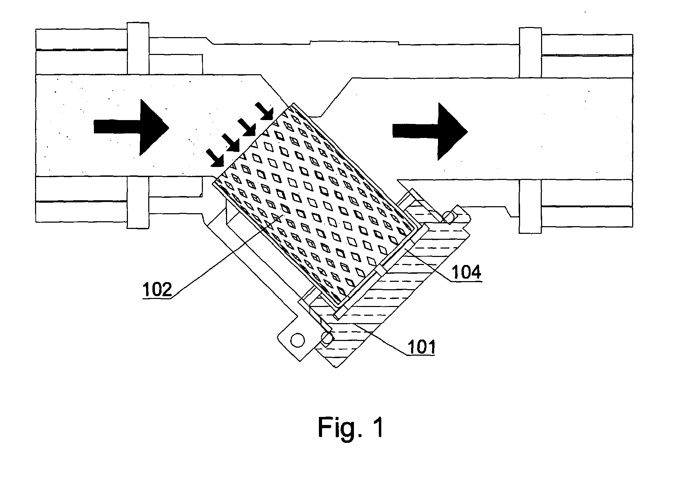

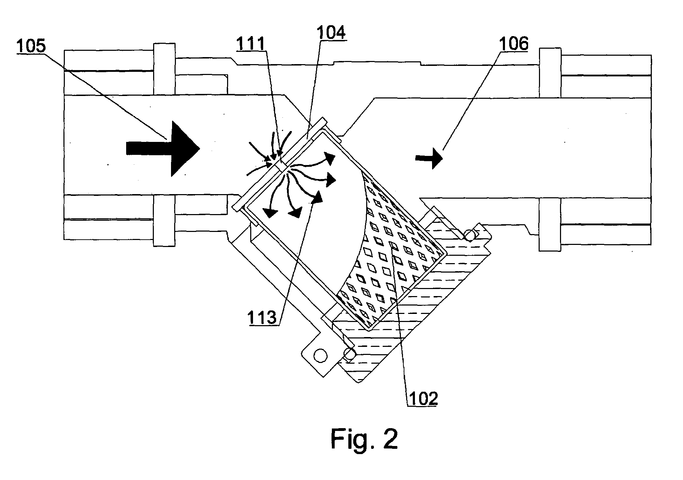

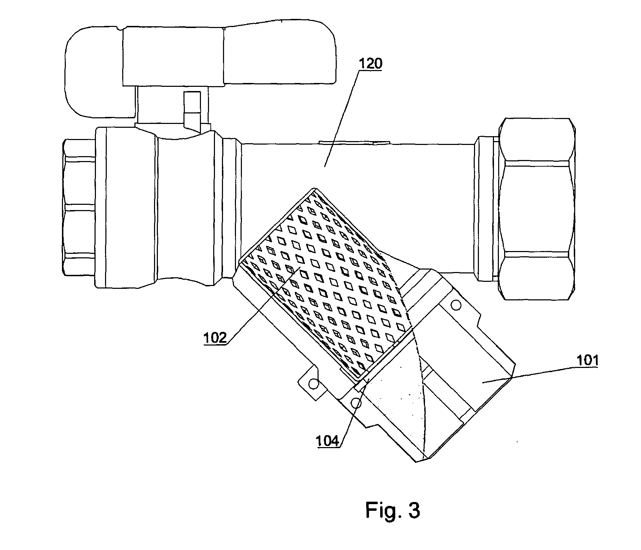

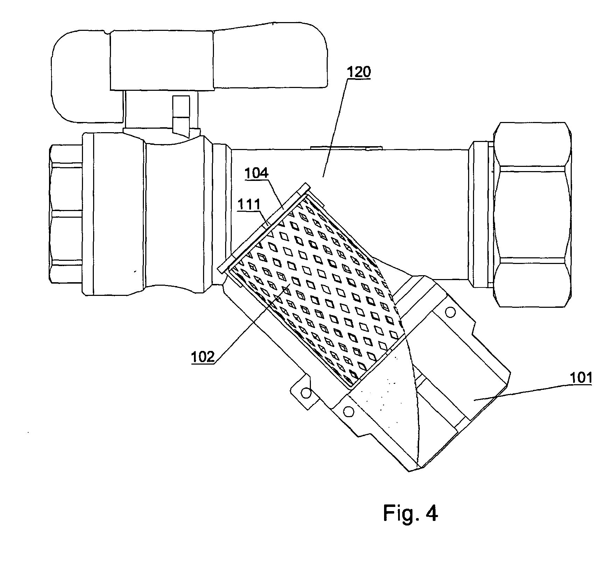

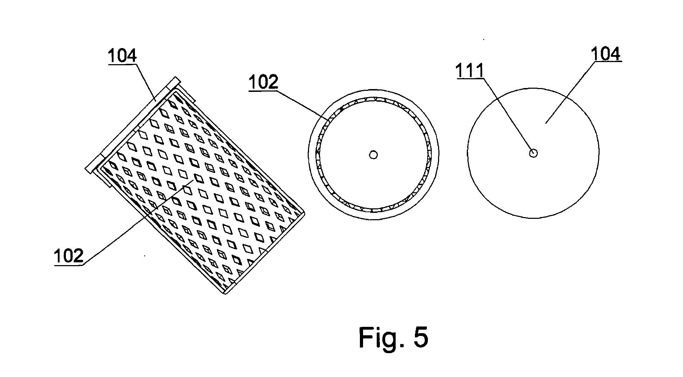

## Claims

1. Water flow reducer device **characterized by** an appropriate working which allows the reduction of the passing flow Illustration 2 (105) through a "Y" filter to a stated delivery capacity Illustration 2 (106).
This device works thanks to the application of the calibrated lens principle Illustration 2 (104) by which it's possible to adjust the flow capacity forcing it to pass in a calibrated hole Illustration 2 (111).

2. Water flow reducer device in compliance with claim 1 **characterized by** a filtering system with discharge reducer have been integrated on a proper place on the ball valve body (illustrations 3 and 4).

3. Water flow reducer device in compliance with claims 1 and 2 **characterized by** an anti-noise device realized with a washer of every kind of metallic and non-metallic material equipped with a calibrated hole and positioned on the filtering cartridge head which is equipped with an inspection plug, in order to be more easily handled to choose between the only filtering function or the filtering function plus flow reduction.
